# EUROPEAN PATENT SPECIFICATION

(11) **EP 2 246 307 B1**
(45) Date of publication and mention of the grant of the patent: **02.01.2013**
(21) Application number: 10170955.8
(22) Date of filing: 29.06.2005
(51) Int. Cl.: C02F 1/00, C02F 5/00, A47J 31/60, C02F 1/28, C02F 1/42

(54) **Water Treatment System**
Wasserbehandlungssystem
Système de traitement de l'eau

(43) Date of publication of application: 03.11.2010
(62) Divisional of application: 05014062.3
(73) Proprietor: Nestec S.A., 1800 Vevey (CH)
(72) Inventor: Achtnich, Ulrich, 8953, Dietikon (CH)
(74) Representative: Rossand, Isabelle

(56) References cited:
- EP-A1- 0 498 913
- US-A- 5 205 932
- US-A- 5 562 824
- US-A- 5 707 536
- US-A- 5 830 360
- US-A1- 2003 000 878
- US-A1- 2003 051 604
- US-A1- 2004 025 880
- US-A1- 2005 051 494

## Description

The present invention relates to water treatment units designed for beverage producing devices, such as for example coffee machines. The present invention also relates to such water-based beverage production devices being provided with such a water treatment unit as well as to a method for treating hard tap water.

It is a well-known problem with any beverage producing device having e.g. a boiler for heating water in order to produce a beverage on the basis of the heated water that the boiler as well as other elements and water heating elements is prone to scale deposition when using the device over a longer period.

This scale origins from scale-forming ions contained in the water supply, wherein the scale-content is especially high in so-called hard water.

To descale e.g. coffee machines (note that the term "descaling" is used in an equivalent matter in the following with the term "decalcification") it is known to periodically have pass through the scale deposition prone tubing a decalcifying agent (e.g. vinegar) which dissolves any deposited scale when passing through the coffee machine. After having such a decalcifying agent pass the coffee machine, it is of course necessary to thoroughly rinse the coffee machine internally in order to avoid a contamination with the decalcifying (descaling) agent when producing subsequently a beverage.

A known pre-emptive measure to reduce the scale-deposition resides in a treatment of the supplied water before it actually gets in touch with the boiler and other elements of the beverage producing device.

This treatment can e.g. consist in an ion-changing process during which calcium ions are removed from the water and can thus no longer contribute to a following scale formation.

From the prior art filter cartridges are known commercialised under the brand "Claris". These filter cartridges are placed in an upright arrangement in a water tank of a coffee machine. The water enters the filter cartridge at the lower end near to the bottom of the water tank and is then guided upwards through the column-shaped filter cartridge. The filter cartridge is filled with an ion-changing resin. Thus, the water leaving the filter cartridge at the upper end thereof is substantially void of ions contributing to the scale formation.

Document US 2005/0051494 A1 relates to a water treatment cartridge for treating drinking water. The water treatment cartridge comprises a housing, an inlet for introducing water into the water treatment cartridge, an outlet port for egress of water from the water treatment cartridge and first and second treatment material provided within the water treatment cartridge. The first and second treatment material are hereby positioned relative to the inlet and outlet in a way that the water enters the water treatment cartridge via the inlet, enters the first treatment material and flows through the first treatment material, then enters the second material and egresses the water treatment cartridge at the outlet.

Document US 2003/0000878 A1 relates to a point-of-use water treatment system unit. The unit comprises a filter housing assembly and a UV tank assembly. In the filter housing assembly a carbon block filtration is provided to filter particles and remove chemical contaminants form the water. Further, a UV light system is employed to destroy micro-organisms. The filter assembly has a cylindrical shape and a central conduit provided within the carbon block. The water flows radially inwardly from the outside of the filter block and then exits through the central conduit in axial direction.

Document US 5,830,360 B1 relates to a gravity fed, pour-through water filtration device including a chamber housing a spiral filter. Water enters the device through an inlet and flows through the spiral or helical filter in intimate contact with the biocidal materials. The filter is hereby made of a ribbon or other surface with biocidal materials disposed thereon wound into the spiral or helical filter shape. The spirally winding ribbon, in either clock-wise or counter clock-wise direction, results in a spiral structure with a space left in the innermost portion thereof forming a central hollow core.

Document US 2003/0051604 A1 relates to a coffee maker with a hot water tank, including water purification agents and a siphon mechanism, which is provided between the coffee-extracting room and a hot-water outlet. The water purification agents are provided in a water purifying room which gets in contact with the water. The water purifying room and the surrounding components hereby are formed of a shape. So when the water level exceeds a predefined level, the water by a type of siphon mechanism will be entirely sucked out from the purifying room.

Document EP 0 498 913 relates to a filter cartridge comprising a shut-off device, said filter cartridge being arranged in a center portion of a water compartment and having water passage slots arranged within a truncated cone enabling water to pass from the compartment to a receiving vessel. Thereby, the filter cartridge can be set for at least two different flow rates in order to adjust the amount of water to be provided to the filter cartridge and thus to the receiving vessel.

Document US 5,205,932 relates to a filter arrangement for water including a plurality of sequential granular filtering media beds separated by porous structural filters. A conical polyethylene diverter screen having vertical slots is arranged which is in connection with a rising tube such that water entering through the vertical slots thereof can be directed to an outlet being arranged on the same side as the inlet of the filter cartridge.

US 5,707,536 relates to a filter cartridge having an inlet and an outlet, wherein a moveable piston is arranged within a cylinder of the filter having at its outlet side a truncated cone comprising parallel slits.

US 5,562,824 relates to a gravity-fed, multi-chambered water purifying assembly for household use. Therein, a filter is retained to an outlet port or nozzle projecting from a water storage chamber. A purification cartridge comprising different filter media is provided at the outlet port or nozzle.

The present invention aims at an improved design for a water treatment for use in connection with a beverage producing device, such as e.g. a coffee machine with a more efficient kinetics of the interaction of the water and the active water treatment substance.

Another aspect of the present invention aims at providing a more convenient solution of water treatment cartridge system, in particular, a solution that can be more conveniently, easily and/or quickly positioned and replaced as compared to existing commercial systems.

This object is achieved by means of the features of the independent claim 1. The dependent claims develop further this object of the present invention.

According to a first aspect of the present invention a water treatment unit designed for a beverage producing device is proposed. The water treatment unit comprises a compartment containing the water treatment substance, wherein in the centre area of the compartment an inner filter cone is provided having water passage slots which allow the treated water to pass and exit the compartment, wherein the water treatment substance is provided at a circumferential area of the inner filter cone and wherein in the compartment deflecting means are provided which are designed to cause the water flow to meander while interacting with the water treatment substance.

Further on, water-path defining means may be provided which are geometrically arranged such that the water to be treated (by interaction with the water treatment substance) enters the compartments an inlet, traverses the compartment containing the water treatment substance in a flow path wherein the water-path defining means are geometrically arranged such that the water flow is

accelerated while traversing the compartment containing the water treatment substance.

In another aspect of the invention, the flow path has may have a substantial radial component (and at the same time interacting with the water treatment substance) and preferably exits the compartment at an outlet which is located radially inside vis-à-vis the inlet.

According to a still further aspect the water-path defining means may be geometrically are arranged such that the effective cross-section of interaction of the water treatment substance and the water decreases in the direction of the water flow path.

All of the above captioned aspects are linked by the common idea that. Accordingly, during the course of the interaction of the water with the water treatment substance, the water will by the common idea that be fewer and fewer charged with components to be treated (e.g. scale). In a preferred example, water containing scale-forming ions will have a continuously decreasing content of these ions along with the course of the water treatment process. Therefore, it is an object of the present invention that at the beginning of the water treatment process more water treatment substance or a longer interaction time should be available per water flow to be treated.

In other words, this specific ratio of water treatment substance (or interaction time) per water flow (i.e. water volume to be treated per time unit) decreases along with the course of the water treatment process.

The radially inwards flow of the water in the water treatment containing compartment is only one embodiment as how to easily implement this approach. Easily other geometrical configurations can be thought of implementing

the same principle. E.g. the column-shaped upright filter cartridges according to the prior art (e.g. of the "Claris"-type) could be amended according to the present invention such that they have a bigger cross-section at the entrance for the water to be treated in comparison to the cross-section where the water leaves the filter cartridge.

In order to implement the radially inwardly directed flow of the water, the water-path defining means can comprise a distributor plate guiding the water flow radially outwards to the inlet of the water treatment substance containing compartment.

The inlet can e.g. be passages in the circumferential area of the distributor plate, wherein the water enters the water treatment substance containing compartment through these passages.

The outlet of the compartment can comprise a filter element having passages retaining the water treatment substance in the compartment.

The water treatment substance can be a decalcifying/descaling agent or an ion-exchanging substance.

The compartment containing the water treatment substance can be provided with an air outlet such that any air bubbles contained in the supplied water and/or gases dissolved in the water can exit the water treatment substance containing compartment.

The invention also relates to a particular vertically divided layer structure, in which a water tank is arranged on top of the water treatment unit. This is in contrast to the radially divided arrangement when placing a column-shaped filter cartridge (e.g. of the Claris-type) in a water tank.

The water treatment unit is geometrically designed to be inserted/removed in/from a beverage producing device as a module.

In another aspect, the invention proposes a water treatment cartridge comprising a compartment for containing a water treatment substance and water path defining means. The cartridge may be is substantially shaped in the form of a disc. Said cartridge comprises a water entry cross sectional side comprising water inlet means and a water outlet side comprising water outlet means;

The wherein said cartridge may further comprises at its water entry side, first fluid coupling means for complementary engaging in fluid connection a fluid outlet means of a water tank surface and at its water outlet side, second fluid coupling means for complementary engaging fluid inlet means of a machine support surface.

One advantage lies in having a device that can be associated easily to a water machine without the hassle to connect the water treatment device to the tubing of the machine nor having to insert the device within the water tank. The exchange of the device can so be made more easily, conveniently and hygienically since the external surface of the device is not in contact with water.

In one aspect of the invention, the cartridge has a height that is lower than the width of the cross sectional sides and the water path-defining means are configured so that water travels in a direction that is radial to the disc. As a result, the device can be placed between the water tank and the support surface of the machine without taking too much space in-between and while keeping a performing water treatment.

In another aspect, the entry side and the outlet side may comprise shapes that are configured to complement the shapes of the receiving surfaces of, respectively, the bottom surface of the water tank and the support surface of the machine. In this way, the cartridge can be placed without need for specific threaded connection.

In another aspect, the second fluid coupling means of the cartridge may comprises a valve means that is configured to open when engaged with the fluid inlet means of the support surface of the machine. As a result, the fluid communication can be readily made by simple complementary shape fitting, press-fitting or clipping and so on without any complex manipulation.

In another aspect, the first fluid coupling means at the entry side of the cartridge preferably possesses opening means that is configured to open a valve means of the water tank that closes the water passage in the bottom surface of the water tank.

The invention also relates to a water-based beverage production device water treatment system, such as e.g. a coffee machine, comprising a water treatment unit as described above.

Further advantages, features and objects of the present invention will become evident for the man skilled in the art when reading the following detailed explanation of the preferred embodiment taking in conjunction with the figures of the enclosed drawings.
- Fig. 1: shows a general (dissembled) view of a water treatment system according to the present invention;
- Fig. 2: shows an exploded view of elements making up the water treatment unit according to the present invention;
- Fig. 3: is a cross-section view of the water treatment system according to Fig. 1 (when assembled);
- Fig. 4: is a view comparable to Fig. 3, wherein the water flow path in the area of the water treatment unit is geometrically shown with arrows.
- Fig. 5: shows an enlarged view of Fig. 3 in order to illustrate the seat of the valve plug, and
- Fig. 6: shows an enlarged view of Fig. 3 in order to illustrate a possible partitioning of the compartment containing the water treatment substance.

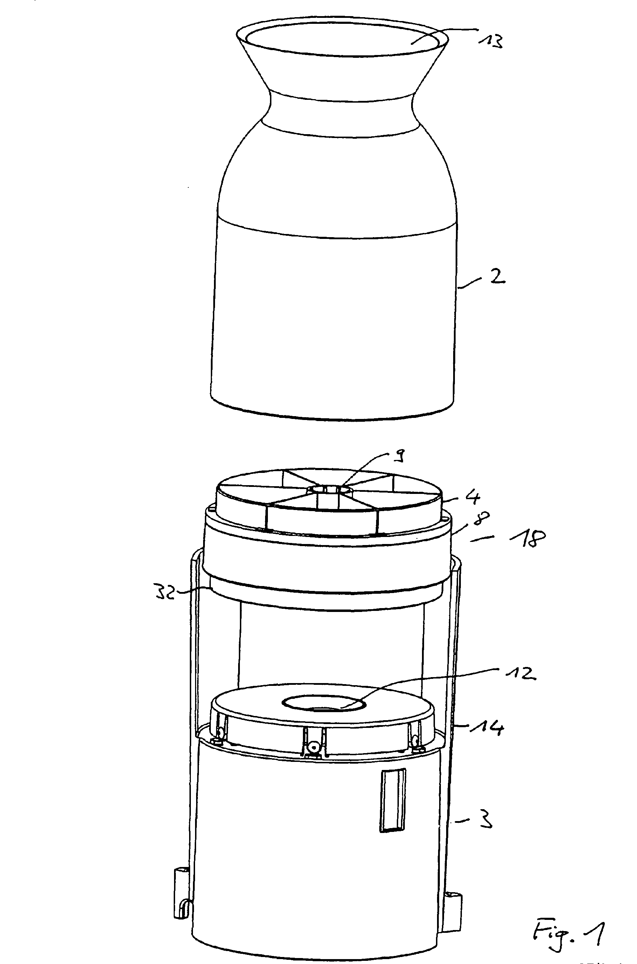

In Fig. 1 a water treatment system 1 is shown which, regarding its volume and shape, is designed to be used in connection with the machine for producing a beverage on the basis of heated water supplied from the water treatment system 1. The water treatment system 1 as shown in Fig. 1 can e.g. be designed for the insertion/removal in/from the casing of a coffee machine.

The water treatment system 1 comprises a water tank 2 and a water treatment unit 2.

A preferred water treatment process according to the present invention is the descaling/decalcifying of e.g. hard tap water. However, the present invention equally finds applications to any other water treatment process in which the water and/or substances contained therein are physically and/or chemically modified in order to improve the characteristics of the water (and the substances eventually contained therein) with regard to a following beverage production process, in which the water is e.g. heated by a boiler.

In some cases the water treatment will have additionally or alternatively the character of a filtering process mechanically removing components contained in the supplied water.

As can be seen from Fig. 1, the water treatment system 1 comprises a water tank 2 having a filling inlet 13. When the water treatment unit 1 is removed from the associated beverage production device (e.g. coffee machine), the user can fill the water tank 2 e.g. with tap water at the inlet 13.

The water tank 2 can be placed on top of the water treatment unit 18, which water treatment unit 18 contains the active water treatment substance being designed for a physical and/or chemical interaction with the water coming from the water tank 2.

The water tank 2 can be one piece with the water treatment unit 18 or, as shown in the drawing, be detachable from the water treatment unit 18 e.g. in order to replace/refill the water treatment unit 18.

In case the water from the tank 2 is to be softened, the water treatment unit 18 will contain e.g. a well-known resin for carrying out an ion-exchanging process. Note that the water treatment substance 15 as such is not the feature of the present invention and therefore reference is made to the well-known literature proposing a wide range of water treatment and especially decalcifying agents.

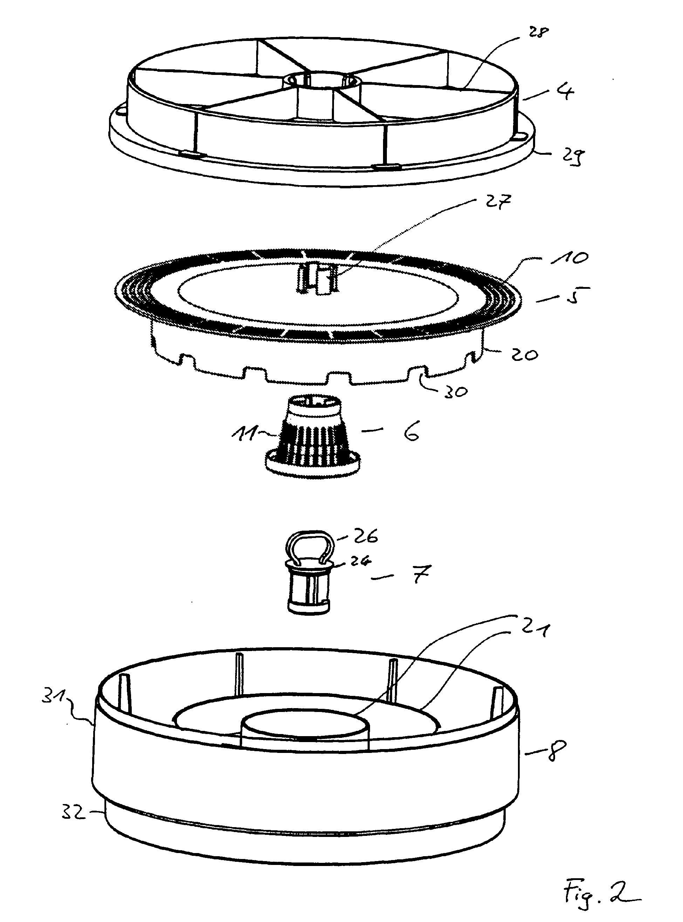

As will be explained later on with reference to Fig. 2, the water treatment unit 1 comprises a cover 4 having a central water passage 9 and a bottom part 8.

When being drained from the bottom part 8 the water from the water treatment unit 18 can enter the water inlet 12 of a water supply 3 which is functionally connected with the following well-known elements of e.g. a coffee machine (pump, boiler, piping etc.).

It is one aspect of the present invention that the water tank 2, the water treatment unit 18 and the water supply 3 of the beverage production device are arranged in horizontally divided, layered arrangement.

According to the invention the tank 2 can be removed from or inserted into a casing of a coffee machine together with the water treatment unit 1.

Therefore, the water treatment unit 18 will only be separated from the water tank 2 in case the water treatment substance contained in the water treatment unit 18 is depleted such that the water treatment unit 1 has to be replaced.

When the water tank 2 and the water treatment unit 18 are arranged on top of the water supply 3, and outer support wall 14 can give a lateral support against an unintentional relative displacement of the cited parts.

Additionally the bottom part 8 is provided with a downwards protruding annular ring 32 which is designed to engage with the part 3 by partially surrounding it.

Fig. 2 shows elements of the water treatment unit 18 in a more detailed view. Reference numeral 4 designates again the cover of the water treatment unit 18 having a central water passage 9 for the water from the water tank 2.

Furthermore the cover 4 comprises stabilizing ridges 28 and a flange portion 29 for enclosing the outer edge of the plate 5 (when assembled).

The water thus traverses the central passage 9 and will arrive at the top surface of a distributor plate 5. As the center portion of the water distributor plate 5 is slightly elevated with relation to the circumferential area of the distributor plate 5, the water will, following gravity, flow from the center area of the water distributor plate 5 to the circumferential area thereof.

The circumferential area of the distributor plate 5 is provided with one or a plurality of separated water passages (slots) 10 through which the water can finally enter a compartment containing the water treatment substance. In the depicted example a multitude of slots 10 are arranged coaxially.

The centre portion of the plate 5 is provided with upwardly extending centring and push elements 27 ensuring a coaxial arrangement of the cover 4 with the plate 5 when assembled.

Further on, these push elements 27 are designed to lift a sealing plug 35 of the water tank exit upwards against the biasing force of e.g. a helicoidal spring element 24 in order to selectively open a fluid connection between the water tank 2 and the water treatment unit 18 when the water tank 2 is properly placed on top of the modular water treatment unit 18. On the other hand, when the water tank 2 is taken off the water treatment unit 18, the sealing plug 35 will automatically seal the exit of the water tank 3 due to the biasing force produced by the spring element 24 and eventually also the hydrostatic pressure of the water in the water tank 2.

In any case, the bottom outlet (exit) of the water tank 3 will be automatically closed when the user removes it from the below-positioned water treatment unit 18 for refill, cleaning, replacement or other purposes.

At least one deflecting element 20 can extend downwards from the lower face of the plate 5 in order to penetrate in the water treatment substance-containing compartment 19, which will be explained later on. In the depicted example the deflecting element is at least one ring 20, the lower rim of which is provided with water-passage notches 30.

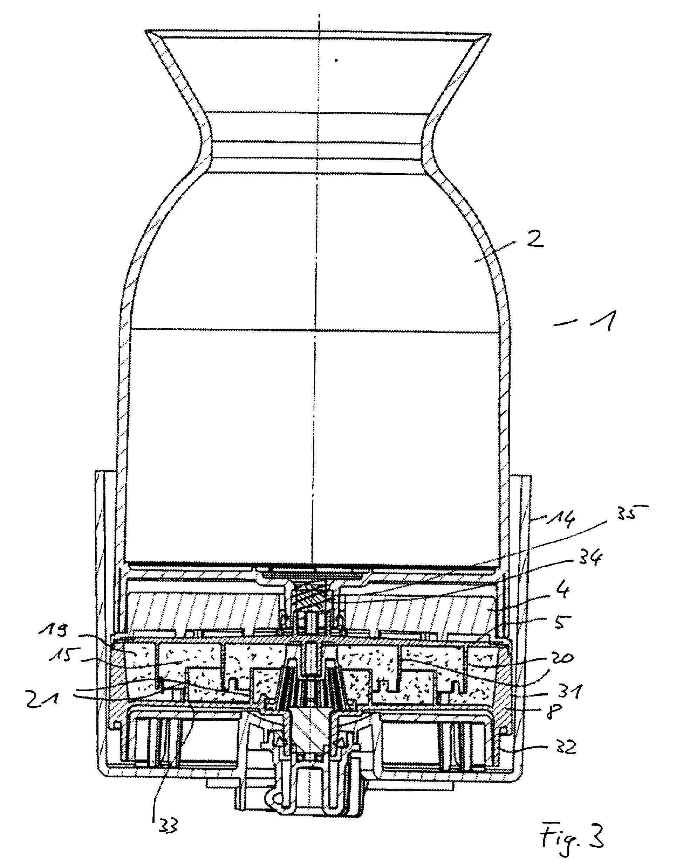

The compartment 19 (see figure 3) containing the water treatment substance 15 is defined between the lower face of the water distributor plate 5 and a circumferential wall 31 and the bottom wall 33 (see figure 3) of a bottom part 8 of the water treatment unit 18.

In any case, the water being distributed radially outwards by the distributor plate 5 will enter the compartment 19 containing the water treatment substance 15 at the circumferential area thereof.

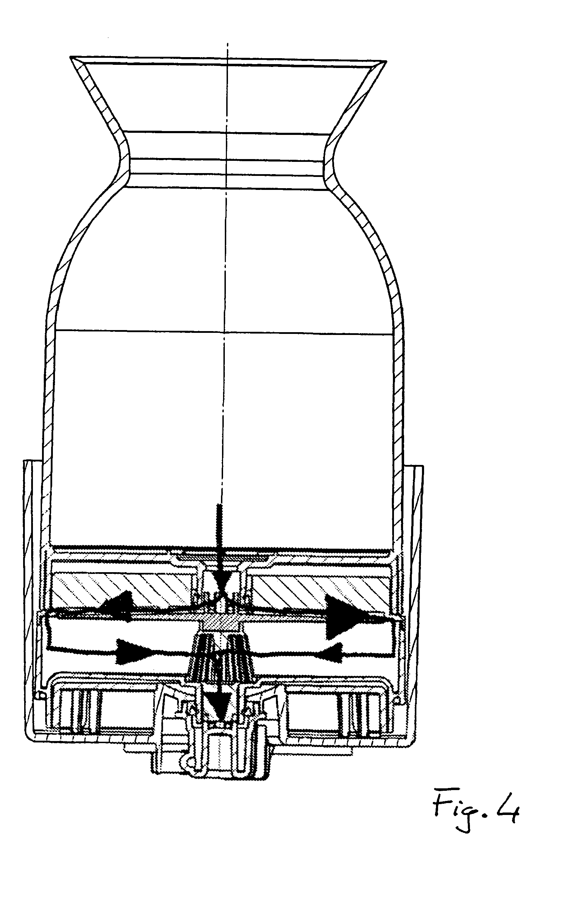

As will be explained later on with reference to Figs. 3 and 4, inside the compartment 19 containing the water treatment substance the water will then flow with a substantial radial component and at the same time interact with the active water treatment substance 19 contained in the compartment 19.

Any flow of the water having a substantial radial component, be it inwards or outwards, has the advantage of a reduction of the axial dimension (height) of the compartment for the water treatment substance. This offers the possibility to design a thin, compact device which can be easily inserted (sandwiched) between the water tank and the rest of the coffee machine while conferring a sufficient length of the effective water/substance interaction path. The water flow thus does not necessarily have a radial component only.

Not that not the entire flow path through the water treatment substance has to present a radial component - but can do so. Partially the water flow path may have axial components only or mainly axial components.

Again, this height-reducing advantage of the at least partially radial flow of the water across the water treatment substance (e.g. the ion-exchanging resin) is achieved both by an inwards and/or outwards flow of the water.

Note that radially outwards flow path sections, radially inwards flow path sections and axial (or mainly axial) flow path sections can be present in any combination.

In the centre area of the compartment 19 an inner filter cone 6 is provided having water passage slots 11 which allow the treated water to pass and exit the compartment 19, all by retaining the water treatment substance in the compartments.

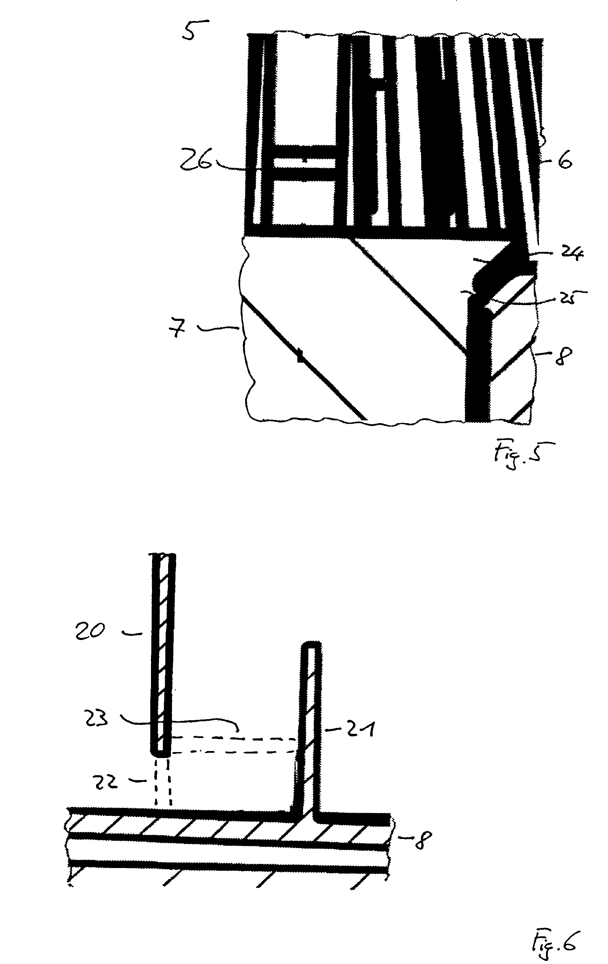

Finally, within the area covered by the cone 6 a valve plug 7 is provided which closes the bottom wall of the tray-shaped bottom part 8 and thus avoids any leakage of water thereof when the water treatment unit 18 is not probably placed on top of the water inlet 12 of the water supply 3 (see Fig. 1). The valve plug can be made from a rubber-elastic material and can be provided with a conical seat 24 and a spring-biasing element 26 the functions of which will be explained later with reference to figure 5.

Fig. 3 shows the arrangement, when the water tank 2 and the water treatment unit 18 are properly placed on top of the water supply 3 of e.g. a coffee machine. In this assembled state the outer flange rim 29 of the cover 4 surround the outer rim of the plate 5. The outer rim area of the plate 5 rests on the annular side wall 31 of the bottom part 8.

From Fig. 3 it can be especially seen that the water going through the passage 9 of the cover part 4 of the water treatment unit 18 will arrive at the elevated centre area of the distributor plate 5 and then flow radially outwards and then downwards through the water passages (slots 10) provided in the circumferential area of the cover 4.

This is also depicted in a simplified view of Fig. 4.

In the circumferential area the water will thus get into contact with the water treatment substance 15 and, due to the hydrostatic pressure from the water column in the water tank 2, will be pressed through the water treatment substance 15 towards the outlet of the compartment 19, which is provided via the water passages in the inner cone 6.

The water treatment substance can be provided as a granules or a powder.

As can be seen from Fig. 2 and 3, the inner cone actually has the shape of a truncated cone tapering towards the top end.

Due to the laws of flow continuity the ratio:

*Amount of water treatment substance to Water flow rate* is higher in the circumferential area of the compartment containing the water treatment substance 15 than in the center area thereof. Therefore, a given water volume will interact with a higher amount of water treatment substance in the circumferential area of the compartment in comparison to the interaction in the center area thereof. This is a preferable arrangement as the water, when entering the compartment with the active water treatment substance will be charged with a higher amount of consistence (scale, etc.) to be treated in comparison to the center portion of the compartment, where the interaction process is more or less finished.

In order to improve the interaction of the water treatment substance 15 with the water, deflecting means 20, 21 (see also figure 6) can be provided which e.g. cause the water flow to meander through the compartment 19. In the depicted example one or more coaxially arranged rings 20 protrude downwards from the lower face of the plate 5. On the other hand, one or more coaxially arranged rings 21 protrude upwards from the bottom face of the bottom part 8. The rings 20 and 21 are respectively radially offset in an interlaced manner. Apart from the definition of the water flow path the deflecting means 20, 21 subdivide the compartment 19 in subspaces for retaining the water treatment substance 15.

In any case the compartment can be completely or partially filled wit the water treatment substance 15.

In figure 5 it can be seen that the conical seat 24 of the valve plug 7 cooperates with the surrounding portion of the bottom part 8. Thus a tight seal is achieved when the valve plug 7 is completely inserted in its seat. The valve plug 7 is actually biased into its seat to close-off the outlet opening. One component of the biasing force originates from the hydrostatic pressure acting upon the top surface of the valve plug 7. Additionally a spring element 26 can be provided which thrusts the valve plug into a tight sealing.

The biasing force is overcompensated and the sealing effect of the valve plug 7 thus no longer present when the water treatment unit 18 is placed on the part 3 of the coffee machine, as in this assembled state elements of the part 3 push the valve plug upwards in order to allow water exiting the compartment 19.

This design thus constitutes a possibility to implement a modular approach (as it can be seen e.g. in figure 1), according to which the water treatment unit 18 is designed as a modular unit which can be separated from the coffee machine. If the modular water treatment unit 18 is placed on top of the coffee machine part, (automatically) a fluid coupling is opened and the water treatment unit 18 and the coffee machine are in fluid connection upon proper placement of the modular water treatment unit 18 on top of the part of the coffee machine.

Note that "automatically" is meant to encompass designs where the systems needs a certain priming before using it, and particularly before using it for the first time.

Thus the water tank 2 and the water treatment unit 18 are respectively designed as modules of the water treatment system 1 which can be placed on top of each other. When properly assembled, the inlet and the outlet of the water treatment unit 18 will be automatically coupled in order to provide for a fluid connection with the water tank 3 and the coffee machine, respectively. On the other hand, these fluid connection will be automatically decoupled an sealed when the user disassembles mentioned layered modules for refill, cleaning, replacement or other purposes.

When distributing the water treatment unit 18 from a manufacturing site, the valve plug 7 can be securely withheld in the conical seat by means of a snap-on engagement 25, such as e.g. an annular protrusion as shown in figure 6.

From figure 6 it can be seen that the compartment 19 can be completely subdivided vertically and/or horizontally by water-permeable partitioning elements 22, 23. These elements can be rigid or flexible. One example for such partitioning elements are comb-like filter walls.

### List of reference numerals:

- 1: Water treatment system
- 2: Water tank
- 3: Water supply of a coffee machine
- 4: Cover of the water treatment unit
- 5: Water distributing plate
- 6: Inner cone of the water treatment unit
- 7: Valve plug
- 8: Bottom part of the water treatment unit
- 9: Central water passage of the cover
- 10: Water passage slots of the distributing plate
- 11: Water passage slots of the inner cone
- 12: Water inlet of the water supply
- 13: Inlet of the water tank
- 14: Outer support wall
- 15: Water treatment substance (e.g. ion exchange resin)
- 16: Lower dome-shaped surface of the water distributing plate
- 17: Air outlet
- 18: Water treatment unit
- 19: Compartment containing the water treatment substance
- 20: Deflecting elements of the plate
- 21: Deflecting means of the bottom part
- 22: Vertical partitioning
- 23: Horizontal partitioning
- 24: Conical seat of the valve plug
- 25: Snap-on engagement
- 26: Spring element of the valve plug
- 27: Centring element of the distributor plate
- 28: Ridges
- 29: Flange
- 30: Notches
- 31: Side wall of the bottom part
- 32: Downside wall of the bottom part
- 33: Bottom of the bottom part
- 34: Spring biasing
- 35: Sealing member of the water tank

## Claims

1. A water treatment unit (18) designed for a beverage producing device, comprising
a compartment (19) for containing a water treatment substance (15), wherein in the centre area of the compartment (19) an inner filter cone (6) is provided having water passage slots (11) which allow the treated water to pass and exit the compartment (19), wherein the water treatment substance (15) is provided at a circumferential area of the inner filter cone (6) and wherein in the compartment (19) deflecting means (20, 21) are provided which are designed to cause the water flow to meander while interacting with the water treatment substance (15).

2. The water treatment unit (18) according to claim 1,
wherein within the area covered by the cone (6) a valve plug (7) is provided.

3. The water treatment unit (18) according to claim 1 or 2,
wherein the cone has the shape of a truncated cone (6) tapering towards the top end.

4. A water treatment unit according to any of the preceding claims,
wherein the water treatment unit further comprises a distributor plate (5) guiding the water-flow radially to the inlet (10) of the compartment (19).

5. The water treatment unit according to claim 4,
wherein the distributor plate (5) guides the water-flow radially outwards.

6. A water treatment unit according to claim 4 or 5,
wherein the inlet are passages (10) in the circumferential area of the distributor plate (5).

7. A water treatment unit according to any of the preceding claims, wherein the compartment (19) is partitioned in sub-chambers by water-permeable, but water treatment substance-retaining partitioning means (22, 23).

8. A water treatment unit according to any of the preceding claims, wherein the outlet (6, 11) of the compartment (19) comprises a filter element (6) having passages (11) retaining the water treatment substance (15).

9. A water treatment system,
comprising a water treatment unit (18) according on any of the preceding claims and
a water tank (2) arranged on top of the water treatment unit (18).

## Patentansprüche

1. Wasserbehandlungseinheit (18) für eine Vorrichtung zur Getränkeherstellung, mit
einer Kammer (19), die eine Substanz zur Wasserbehandlung (15) enthält, wobei sich im mittleren Bereich der Kammer (19) ein innerer Filterkegel (6) mit Wasserdurchgangsschlitzen (11) befindet, die es dem behandelten Wasser ermöglichen, durch die Kammer (19) hindurchzufließen und aus ihr herauszutreten, wobei die Substanz zur Wasserbehandlung (15) an einem Umfangsbereich des inneren Filterkegels (6) bereitgestellt ist, und wobei in der Kammer (19) Umlenkelemente (20, 21) vorhanden sind, die so konstruiert sind, dass die Wassermenge mäandert, während sie mit der Substanz zur Wasserbehandlung (15) interagiert.

2. Wasserbehandlungseinheit (18) nach Anspruch 1,
wobei in dem Bereich, der von dem Kegel (6) abgedeckt ist, ein Ventilstopfen (7) vorhanden ist.

3. Wasserbehandlungseinheit (18) nach Anspruch 1 oder 2,
wobei der Kegel die Form eines Kegelstumpfes (6) besitzt, der zum oberen Ende hin spitz zuläuft.

4. Wasserbehandlungseinheit nach einem der vorhergehenden Ansprüche, wobei die Wasserbehandlungseinheit weiterhin eine Verteilerplatte (5) aufweist, die den Wasserfluss radial zu dem Eintritt (10) der Kammer (19) lenkt.

5. Wasserbehandlungseinheit nach Anspruch 4,
wobei die Verteilerplatte (5) den Wasserfluss radial nach außen lenkt.

6. Wasserbehandlungseinheit nach Anspruch 4 oder 5,
wobei es sich bei dem Eintritt um Durchlässe (10) in dem Umfangsbereich der Verteilerplatte (5) handelt.

7. Wasserbehandlungseinheit nach einem der vorhergehenden Ansprüche, wobei die Kammer (19) in Unterkammern unterteilt ist, und zwar durch wasserdurchlässige Unterteilungselemente, die jedoch die Substanz zur Wasserbehandlung zurückhalten (22, 23).

8. Wasserbehandlungseinheit nach einem der vorhergehenden Ansprüche, wobei der Austritt (6, 11) der Kammer (19) ein Filterelement (6) mit Durchlässen (11) aufweist, die die Substanz zur Wasserbehandlung (15) zurückhalten.

9. Wasserbehandlungssystem,
mit einer Wasserbehandlungseinheit (18) nach einem der vorhergehenden Ansprüche und
einem Wasserbehälter (2), der oben auf der Wasserbehandlungseinheit (18) angeordnet ist.

## Revendications

1. Unité de traitement de l'eau (18) conçue pour un dispositif de préparation de boissons comportant
un compartiment (19) contenant une substance de traitement de l'eau (15), au centre du compartiment (19) un cône filtrant interne (6) étant prévu qui comporte des fentes de passage de l'eau (11) permettant à l'eau traitée de passer et sortir le compartiment (19), le substance de traitement de l'eau (15) étant prévu à une zone périphérique du cône filtrant interne (6), et des moyens de déviation (20, 21) étant prévus dans le compartiment (19) conçus pour amener la circulation d'eau de serpenter lorsqu'elle interagit avec la substance de traitement de l'eau (15).

2. Unité de traitement de l'eau (18) selon la revendication 1,
un bouchon de soupape (7) étant prévu dans la région couverte par le cône (6).

3. Unité de traitement de l'eau (18) selon la revendication 1 ou 2,
le cône (6) comportant la forme d'un tronc de cône (6) rétrécissant vers son extrémité supérieure.

4. Unité de traitement de l'eau selon l'une quelconque des revendications précédentes, l'unité de traitement de l'eau comportant en outre une plaque de distribution (5) dirigeant la circulation d'eau radialement vers l'entrée (10) du compartiment (19).

5. Unité de traitement de l'eau (18) selon la revendication 4,
la plaque de distribution (5) dirigeant la circulation d'eau radialement vers l'extérieur.

6. Unité de traitement de l'eau selon la revendication 4 ou 5,
l'entrée étant des passages dans la zone périphérique de la plaque de distribution (5).

7. Unité de traitement de l'eau selon l'une quelconque des revendications précédentes, le compartiment (19) étant divisé en sous-chambres par des moyens de division perméables à l'eau mais retenant la substance de traitement de l'eau (22, 23).

8. Unité de traitement de l'eau selon l'une quelconque des revendications précédentes, la sortie (6, 11) du compartiment (19) comprenant un élément filtrant (6) qui comporte des passages (11) retenant la substance de traitement de l'eau (15).

9. Système de traitement de l'eau, comportant une unité de traitement de l'eau (18) selon l'une quelconque des revendications précédentes, et
un réservoir d'eau (2) placé sur l'unité de traitement de l'eau (18).
